# FASCICULE DE BREVET EUROPEEN

(11) **EP 3 277 531 B1**
(45) Date de publication et mention de la délivrance du brevet: **01.05.2024**
(21) Numéro de dépôt: 16713540.9
(22) Date de dépôt: 04.03.2016
(51) Int. Cl.: B60K 1/02, B60K 6/36, B60K 6/44, B60K 6/547

(54) **GROUPE MOTOPROPULSEUR HYBRIDE COMPORTANT DEUX MOTEURS ELECTRIQUES ET UN MOTEUR THERMIQUE NON COAXIAUX**
HYBRIDANTRIEB MIT ZWEI NICHT MITEINANDER KOAXIALEN ELEKTROMOTOREN UND EINER WÄRMEKRAFTMASCHINE
HYBRID POWERTRAIN COMPRISING TWO ELECTRIC MOTORS AND ONE HEAT ENGINE WHICH ARE NOT COAXIAL WITH ONE ANOTHER

(30) Priorité: 31.03.2015 FR 1552703
(43) Date de publication de la demande: 07.02.2018
(73) Titulaire: NEW H POWERTRAIN HOLDING, S.L.U., 47008 Valladolid (ES)
(72) Inventeur: EJARQUE, Pascal, 78370 Plaisir (FR); LASSEUR, Bertrand, 92370 Chaville (FR); VIGNON, Antoine, 91430 Igny (FR)
(74) Mandataire: Renault Group
(86) Numéro de dépôt international: PCT/FR2016/050513
(87) Numéro de publication internationale: WO 2016/156688

(56) Documents cités:
- WO-A1-02/47931
- WO-A1-2007/110721
- DE-A1- 19 850 549
- DE-A1- 19 903 936
- FR-A1- 3 007 696

## Description

La présente invention se rapporte aux architectures de traction hybride, notamment pour véhicule routier.

Elle concerne en particulier un groupe motopropulseur (GMP) hybride, comportant deux machines électriques et un moteur thermique.

Plus précisément, l'invention a pour objet un groupe motopropulseur hybride de véhicule, composé de trois sources motrices reliées par des arbres d'entrée décalés axialement, à une boîte de vitesses comme définie par la revendication 1.

La présente invention a aussi pour objet le procédé de commande de ce groupe motopropulseur (GPM) tel que défini par la revendication 10.

Elle porte également sur la boîte de vitesses de ce GMP telle que définie par la revendication 7.

Il existe aujourd'hui dans le domaine automobile un besoin pour des GMP puissants, qui émettent peu de gaz carbonique, et qui permettent de réaliser des déplacements sur des distances importantes.

Par la publication US 8 622 861, on connaît un GMP hybride pour véhicule muni d'un moteur thermique et de deux machines électriques montées autour d'un train épicycloïdal. L'une des machines électriques est montée en moteur principal, et l'autre en génératrice. Ce GMP dispose de deux rapports à passage sous couple pour la machine électrique et le moteur thermique. Toutefois, le moteur électrique n'est pas déconnectable à haute vitesse, et la génératrice n'est pas utilisable en moteur. Les possibilités d'utilisation pratique de ce GMP sont donc réduites.

Le document DE19850549 décrit aussi une boîte de vitesse avec trois arbres d'entrée.

La présente invention vise à réaliser une chaîne de traction multimodes, permettant l'utilisation simultanée, ou découplée, de trois sources motrices, pour disposer de nombreux modes de fonctionnement, électriques, thermiques ou hybrides.

Dans ce but, chacun des deux coupleurs permet d'établir deux rapports de transmission différents, entre un des arbres d'entrée et l'arbre de sortie commun.

Dans un mode de réalisation particulier de l'invention, les trois sources motrices sont respectivement une machine électrique principale, une machine électrique secondaire, et un moteur thermique.

La boîte de vitesses comporte :
- un premier coupleur permettant d'établir la transmission du couple d'un premier arbre d'entrée sur l'arbre de sortie commun sur deux rapports de transmission, et
- un deuxième coupleur permettant d'établir la transmission du couple d'un deuxième arbre d'entrée vers l'arbre de sortie commun, sur deux rapports de transmission.

La boîte de vitesses comporte un pignon double tournant librement autour du troisième arbre d'entrée, pour envoyer le couple des deux premiers arbres d'entrée sur l'arbre de sortie commun.

L'ouverture des deux coupleurs, permet au véhicule de se déplacer avec seulement la machine électrique principale. L'appoint de la machine électrique secondaire est obtenu sur deux rapports électriques, en fermant un coupleur.

La fermeture simultanée des deux coupleurs, permet le déplacement du véhicule avec le cumul des deux machines électriques sur quatre modes de transmission hybrides, définis par les rapports de transmission thermique et hybrides.

Ces mesures permettent de proposer à la fois une puissance globale importante par l'utilisation simultanée des trois sources motrices, ainsi que de nombreuses configurations de fonctionnement, telles que la recharge des batteries en roulage ou à l'arrêt, un mode « refuge », avec uniquement le moteur thermique, ou bien des modes hybrides « *boost »,* où la puissance du moteur thermique se cumule à celle des deux machines électriques.

La présente invention sera mieux comprise à la lecture de la description suivante d'un mode de réalisation non limitatif de celle-ci, en se reportant aux dessins annexés, sur lesquels :

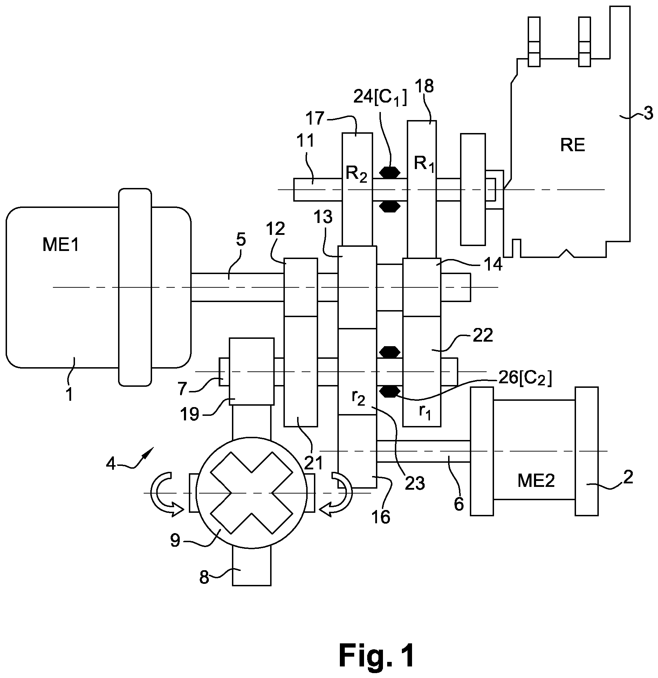

- la figure 1 est un schéma d'architecture du GMP proposé,
- les figures 2A à 2C illustrent trois modes électriques en marche avant,
- les figures 3A et 3B illustrent deux modes électriques en marche arrière,
- les figures 4A à 4D illustrent quatre modes hybrides,
- les figures 5A à 5D illustrent quatre modes de recharge de batteries, et
- les figures 6A à 6D illustrent quatre autres modes hybrides, avec le moteur thermique en prise directe.

Le GMP représenté schématiquement sur les figures, est composé de trois sources motrices 1, 2, 3 reliées par des arbres d'entrée décalés axialement 11, 12, 6 dans une boîte de vitesses 4 à arbres parallèles et à engrenages. Cette boîte possède deux coupleurs 24 (C1), 26 (C2), permettant d'établir sélectivement le transfert du couple fourni par l'arbre d'entrée de chaque source motrice, sur un arbre de sortie commun 7 vers les roues du véhicule. Dans le mode de réalisation non limitatif de l'invention, illustré par les figures, les trois sources motrices sont respectivement une machine électrique principale ME1, une machine électrique secondaire ME2, et un moteur thermique 3. Leurs couples sont réunis dans la boîte 4. Leurs trois arbres d'entrée sont décalés axialement les uns par rapport aux autres, et reliés à l'arbre de sortie commun 7.

La boîte de vitesses 4 présente ainsi un arbre d'entrée 5 pour la machine électrique principale 1 (ME1), un arbre d'entrée 6, pour la machine électrique secondaire 2 (ME2) et un arbre d'entrée 11 pour le moteur thermique 3. L'arbre de sortie commun, ou arbre secondaire 7, entraîne la couronne 8 d'un différentiel 9 relié aux roues du véhicule. L'arbre entrée 11 du moteur thermique n'est pas concentrique aux arbres d'entrée 5, 6 des machines électriques. Le couple du moteur thermique 3 est envoyé sur l'arbre de sortie commun 7 par l'intermédiaire d'un pignon double 13, 14, tournant librement sur l'arbre d'entrée 5 de la machine électrique principale ME1, dont le couple est transmis en permanence à l'arbre de sortie commun 7 par un pignon fixe 12 de son arbre d'entrée 5, en prise avec un pignon fixe 21 de l'arbre 7.

L'arbre d'entrée 5 de la machine électrique principale ME1 porte, de la gauche vers la droite des schémas, le pignon fixe 12 de descente sur l'arbre secondaire 7, et le pignon double 13, 14, monté sur des aiguilles en libre en rotation. L'arbre d'entrée 6 de la machine électrique secondaire ME2, porte un seul pignon fixe 16 de renvoi sur l'arbre de sortie 7. L'arbre d'entrée 11 du moteur thermique porte deux pignons fous 17, 18, de rapport R1 et R2, engrenant respectivement avec chacune des dentures 13, 14, du pignon double 13, 14 sur les « *rapports thermiques* » R1 et R2. L'arbre de sortie commun 7 vers les roues du véhicule porte de la gauche vers la droite des schémas, un pignon d'attaque 19 sur la couronne de différentiel 8, un pignon fixe de ligne secondaire 21 en prise avec le pignon fixe 12 de l'arbre d'entrée 5 de la machine électrique principale ME1, et deux pignons fous 22, 23 de rapport de transmission électrique r1 et r2, engrenant respectivement avec chacune des dentures 13, 14, du pignon double 13, 14 sur les « *rapports électriques* » r1 et r2.

La boîte 4 ne comporte donc que deux coupleurs C1, C2. Le premier coupleur C1 établit la transmission du couple du moteur thermique 3 sur l'arbre de sortie commun 7 sur les deux rapports de transmission thermiques R1, R2. Le deuxième coupleur C2 établit la transmission du couple de la machine électrique secondaire ME2 vers l'arbre de sortie commun 7, sur deux rapports de transmission électriques r1, r2.

Les deux pignons fous 17, 18 de l'arbre d'entrée thermique 11 sont associés au premier coupleur 24 (C1) par exemple un coupleur à baladeur, qui lie en rotation l'un ou l'autre d'entre eux à leur arbre, lorsque son baladeur est écarté vers la gauche ou vers la droite à partir de sa position centrale. Les deux pignons fous 23, 26 de l'arbre de sortie 7 sont associés au deuxième coupleur 26 (C2), par exemple à baladeur qui lie l'un ou l'autre de ces pignons sur leur arbre 7, lorsqu'il est déplacé vers la gauche ou vers la droite, à l'écart de sa position centrale.

En résumé, la boîte 4 comporte deux coupleurs, de préférence à baladeur, C1 et C2 :
- le premier coupleur C1 permet d'établir la transmission du couple du moteur thermique sur l'arbre d'entrée 6 de la machine électrique principale ME1, sur l'un ou l'autre de deux « *rapports thermiques* » R1, R2 ;
- le deuxième coupleur C2 permet d'établir la transmission du couple de la machine électrique secondaire 2 sur l'un ou l'autre des « *rapports électriques* » r1, r2.

Le couple de l'arbre d'entrée 11, descend sur le pignon double 13, 14 par l'un ou l'autre des deux pignons fous 17, 18 selon la position du premier coupleur C1. Le couple de l'arbre d'entrée 6 est transmis sur l'arbre de sortie commun 7 par l'engrenage de pignons 16, 22, ou par l'intermédiaire du pignon double 13, 14 selon la position du deuxième coupleur C2.

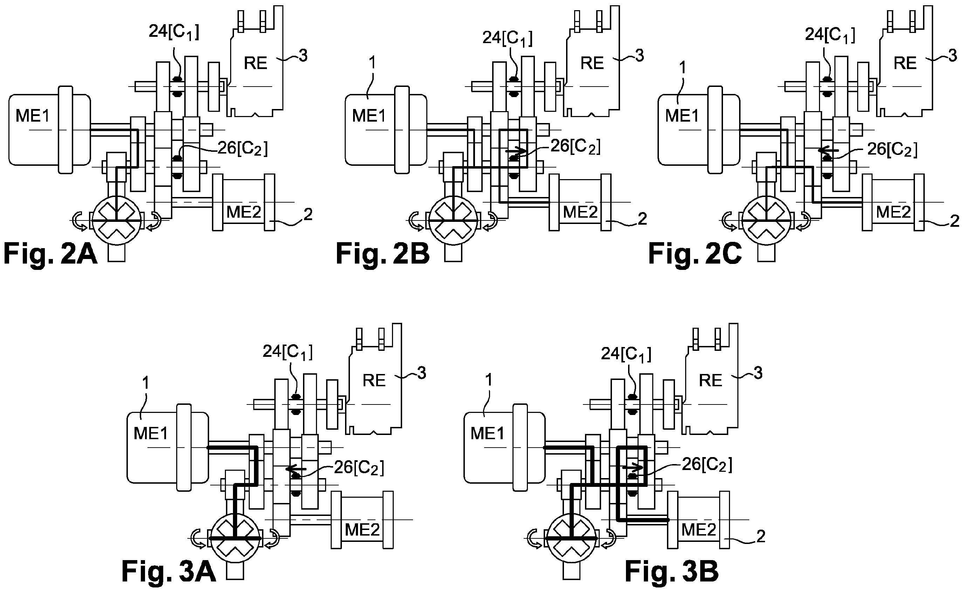

Les modes de fonctionnement illustrés par les figures 2A à 3B sont purement électriques. Sur la figure 2A, les deux coupleurs C1, C2 sont ouverts. Le véhicule peut se déplacer avec seulement la machine électrique principale ME1, en prise directe. La fermeture du deuxième coupleur C2 autorise l'appoint de la machine électrique secondaire ME2 sur le premier rapport électrique r1, lorsque son baladeur se déplace vers la droite (figure 2B), ou sur le deuxième rapport électrique r2, lorsqu'il se déplace vers la gauche (figure 2C). Le véhicule se déplace alors en mode électrique avec la machine électrique principale ME1 et l'appoint de la machine électrique secondaire ME2 sur le rapport électrique r1 ou r2.

La marche arrière est obtenue en inversant le sens de rotation de la machine électrique principale ME1, avec les deux coupleurs ouverts (figure 3A). En cas de forte pente, l'appoint de la machine secondaire ME2 peut être requis. Il suffit de déplacer le deuxième coupleur vers la droite ou vers la gauche, et de faire tourner la machine ME2 à l'envers, comme la machine principale ME1. En plaçant le baladeur du deuxième coupleur à droite, comme sur la figure 3B, le véhicule peut bénéficier, en marche arrière, de l'appoint de la machine secondaire ME2, sur le rapport électrique r1. En déplaçant le baladeur vers la gauche (disposition non illustrée par les figures), la machine ME2 fournirait son appoint en marche arrière, sur le rapport r2.

Les quatre figures suivantes décrivent des modes de fonctionnement hybrides, où les couples des trois sources motrices se cumulent, selon les positions des deux coupleurs C1 et C2. Le couple du moteur thermique s'ajoute à celui de la machine électrique principale ME1 en descendant sur le pignon double 13, 14, sur le rapport R1 par le pignon 18. Celui de la machine électrique additionnelle ME2 transite par le pignon 22 sur le rapport r1. En résumé, la fermeture simultanée des deux coupleurs C1, C2 permet le déplacement du véhicule avec le cumul des deux machine électriques 1, 2 sur quatre modes de transmission hybrides définis par les rapports de transmission thermique et hybrides : R1, r1 ; R1, r2 ; R2, r1 ; R2, r2.

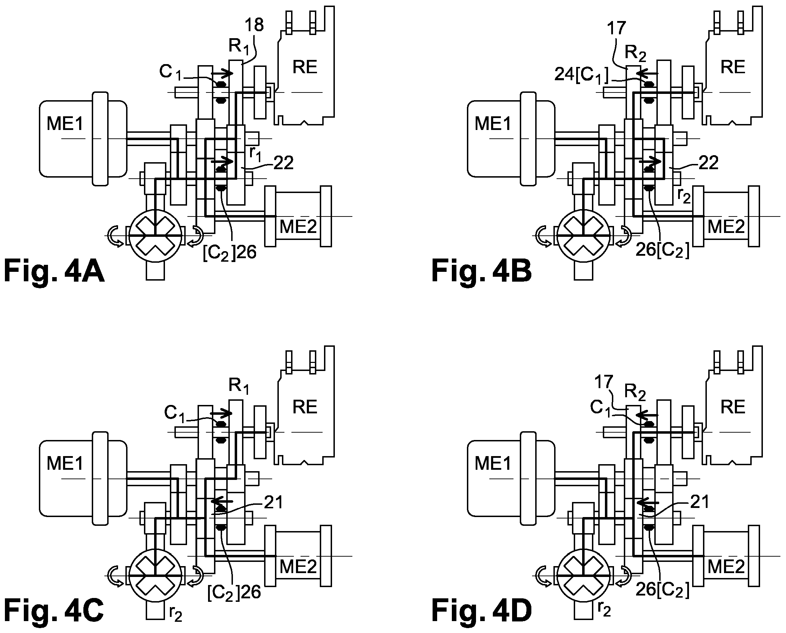

Sur la figure 4B, le coupleur C1 est passé à gauche. Le GMP cumule le couple de la machine électrique principale ME1, celui du moteur thermique sur le rapport R2 par le pignon 17, et celui de la machine électrique additionnelle ME2 sur le rapport r1. Sur la figure 4C, le coupleur C1 est à gauche, et le coupleur C2 est à gauche. Le GMP cumule le couple de la machine électrique principale ME1, celui du moteur thermique sur le rapport R2 par le pignon 17, et celui de la machine électrique additionnelle ME2 sur le rapport r2. Sur la figure 4D, le coupleur C1 est à gauche et le coupleur C2 est à gauche. Le GMP cumule le couple de la machine électrique principale ME1, celui du moteur thermique sur le rapport R2 par le pignon 17, et celui de la machine électrique additionnelle sur le rapport r2 par le pignon 18.

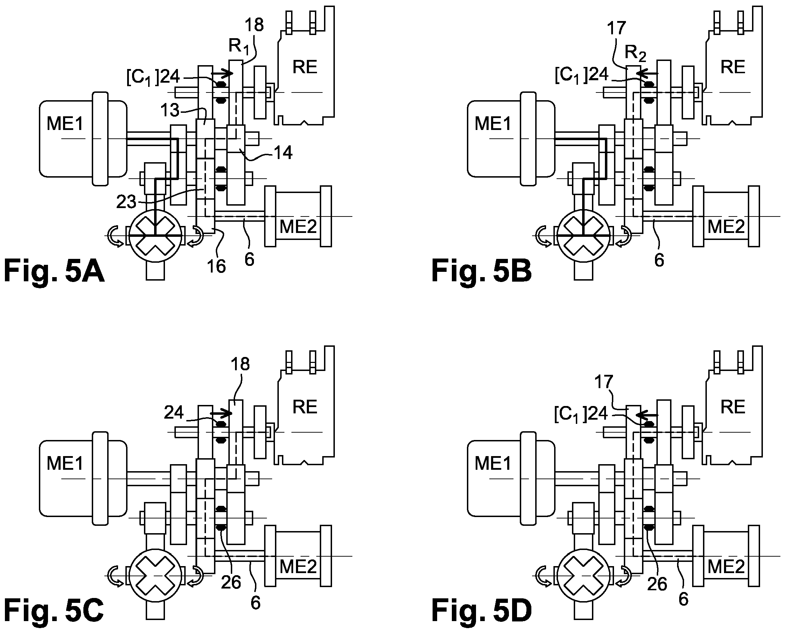

Les figures 5A à 5D illustrent des modes de fonctionnement de prolongation d'autonomie, dits « *range extender* » où le moteur thermique fait tourner la machine électrique secondaire ME2 en générateur, en vue de charger les batteries du véhicule, avec le premier coupleur fermé. Sur les figures 5A et 5B, le véhicule se déplace grâce à la machine électrique principale ME1. Il est à l'arrêt sur les figures 5C et 5D. Sur les figures 5A et 5C, le coupleur C1 est à droite. Le couple de l'arbre d'entrée 6 de la machine ME2 descend par les pignons 18, 14, 13, 23 et 16. Le moteur thermique entraîne la machine électrique sur le rapport R1. Sur les figures 5B et 5D, C1 est à gauche. Le couple descend sur l'arbre 6 par les pignons 17, 13, 23 et 16. Le moteur thermique entraîne la machine ME2 sur le rapport R2.

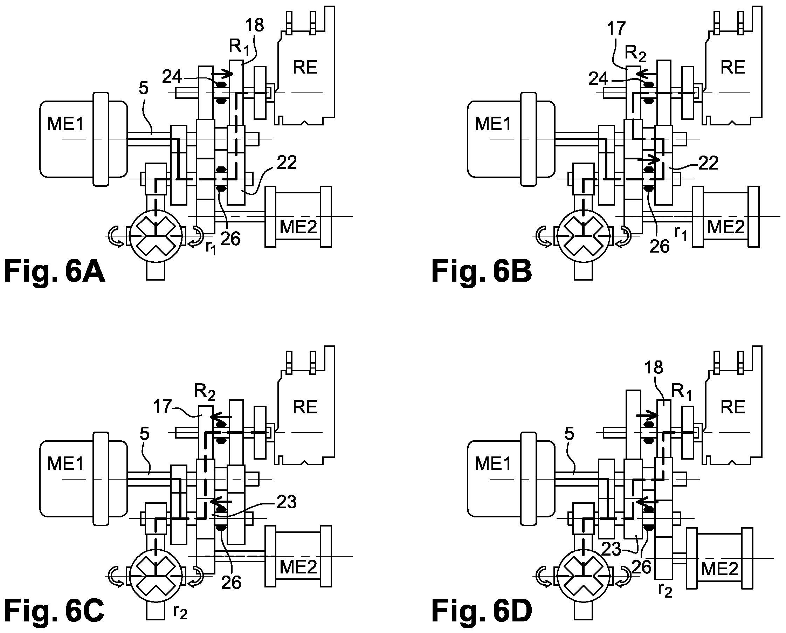

Les figures 6A à 6D illustrent quatre autres modes de fonctionnement hybrides, avec le moteur thermique en prise directe, et la machine électrique principale ME1. Ces modes sont particulièrement adaptés aux déplacements à vitesse stabilisée. Sur la figure 6A, le coupleur C1 est craboté sur le rapport R1 (pignon 18) et le coupleur C2 sur le rapport r1 (pignon 22). Sur la figure 6B, le coupleur C1 est craboté sur le rapport R2 (pignon 17), et le coupleur C2 sur le rapport r1 (pignon 22). Sur la figure 6C le coupleur C1 est craboté sur le rapport R2 (pignon 17) et le coupleur C2 sur le rapport r2 (pignon 21). Sur la figure 6D, le coupleur C1 est craboté sur le rapport R1 (pignon 18), et le coupleur C2 sur le rapport r2 (pignon 21). La fermeture simultanée des deux coupleurs C1, C2 permet ainsi de déplacer le véhicule en cumulant la machine électrique principale ME1 et le moteur thermique 3, sur quatre modes de transmission hybrides définis par les rapports de transmission thermique et hybrides : R1, r1 ; R1, r2 ; R2, r1 ; R2, r2.

Les avantages du GMP proposé et de sa boîte de vitesses, ainsi que de son fonctionnement, sont nombreux. Parmi ceux-ci, il faut souligner la très grande flexibilité d'utilisation, qui permet de proposer un véhicule électrique puissant, avec une autonomie importante.

On peut notamment :
- cumuler la puissance des trois moteurs et proposer un véhicule sportif et puissant,
- rouler en mode électrique, standard ou économique,
- proposer un mode sportif « *boost* » avec une démultiplication différente entre les deux moteurs électriques,
- faire de la récupération d'énergie cinétique,
- recharger les batteries en roulant en mode « range extender », et
- rouler en mode « *refuge* », avec uniquement le moteur thermique.

Enfin, le GMP effectue ses passages de rapports sans rupture de couple, car la machine électrique principale reste en prise constante durant les passages de rapports des différents modes. Par ailleurs, l'architecture de boîte présente l'avantage de n'avoir que deux coupleurs à baladeur, pour un grand nombre de modes d'utilisation et de combinaisons possibles, notamment deux rapports de transmission pour le moteur thermiques et pour la machine électrique secondaire, un « *mode extender* », positionné sur le rendement optimal, et un rapport traction en mode thermique positionné sur la puissance maximale du moteur.

## Revendications

1. Groupe motopropulseur hybride de véhicule, composé d'une boite de vitesse selon l'une des revendications 7 à 9 et de trois sources motrices (1, 2, 3), les trois sources motrices (1 , 2, 3) étant reliées respectivement aux arbres d'entrée décalés axialement ( 5, 6, 11) de la boîte de vitesses (4).

2. Groupe motopropulseur selon la revendication 1, **caractérisé en ce que** les trois sources motrices sont respectivement une machine électrique principale (1), une machine électrique secondaire (2) et un moteur thermique (3) .

3. Groupe motopropulseur selon la revendication précédente, **caractérisé en ce que** le couple du moteur thermique (3) est envoyé sur l'arbre de sortie commun (7) par l'intermédiaire du pignon double (13, 14), tournant librement sur l'arbre d'entrée (5) de la machine électrique principale (1).

4. Groupe motopropulseur selon l'une des revendications 2 à 3, **caractérisé en ce que** le premier coupleur (24) établit la transmission du couple du moteur thermique (3) sur l'arbre de sortie commun (7) sur deux rapports de transmission (R1, R2).

5. Groupe motopropulseur selon la revendication 2 ou 3 ou 4, **caractérisé en ce que** le deuxième coupleur (26) établit la transmission du couple de la machine électrique secondaire (2) vers l'arbre de sortie commun (7), sur deux rapports de transmission (r1, r2).

6. Groupe motopropulseur selon l'une des revendications 2 à 5, **caractérisé en ce que** le couple de la machine électrique principale (1) est transmis en permanence à l'arbre de sortie commun (7) par un pignon fixe (12) de son arbre d'entrée 5, en prise avec un pignon fixe (21) de l'arbre de sortie commun (7).

7. Boîte de vitesses (4) à arbres parallèles et à engrenages, comportant trois arbres d'entrée (5, 6, 11) décalés axialement, destinés à être reliés respectivement à trois sources motrices (1, 2, 3) et reliés à un arbre de sortie commun vers les roues du véhicule, et deux coupleurs (24, 26) permettant d'établir sélectivement le transfert du couple fourni par l'arbre d'entrée de chaque source motrice, sur l'arbre de sortie commun (7), comportant
- un premier coupleur (24) permettant d'établir la transmission du couple d'un premier arbre d'entrée (11) sur l'arbre de sortie commun (7) sur deux rapports de transmission (R1, R2), et
- un deuxième coupleur (26) permettant d'établir la transmission du couple d'un deuxième arbre d'entrée (6) vers l'arbre de sortie commun (7), sur deux rapports de transmission (r1, r2),
**caractérisée en ce qu'**elle comporte un pignon double (13, 14) tournant librement autour du troisième arbre d'entrée (5) pour envoyer le couple des deux premiers arbres d'entrée (11, 6) sur l'arbre de sortie commun (7).

8. Boîte de vitesses selon la revendication 7, **caractérisée en ce que** le couple du premier arbre d'entrée (11) descend sur le pignon double (13, 14) par l'un ou l'autre de deux pignons fous (17, 18) selon la position du premier coupleur (24).

9. Boîte de vitesses selon la revendication 7 ou 8, **caractérisée en ce que** le couple du deuxième arbre d'entrée est transmis sur l'arbre de sortie commun 7 par un engrenage (16, 23), ou par l'intermédiaire du pignon double (13, 14) selon la position du deuxième coupleur (26).

10. Procédé de commande d'un groupe motopropulseur selon l'une des revendications 2 à 6, **caractérisé en ce que** l'ouverture des deux coupleurs (24, 26), permet de déplacer le véhicule avec seulement la machine électrique principale (1) .

11. Procédé de commande d'un groupe motopropulseur selon la revendication précédente, **caractérisé en ce que** la fermeture du deuxième coupleur (26) assure le déplacement du véhicule en mode électrique avec la machine électrique principale (1) et l'appoint de la machine électrique secondaire (2) sur le rapport électrique (r1) ou (r2).

12. Procédé de commande d'un groupe motopropulseur selon la revendication 10 ou 11, **caractérisé en ce que** la fermeture simultanée des deux coupleurs (24, 26) permet le déplacement du véhicule avec le cumul des deux machine électriques (1, 2) sur quatre modes de transmission hybrides définis par les rapports de transmission thermique et hybrides (R1, r1), (R1, r2), (R2, r1), (R2, r2).

13. Procédé de commande d'un groupe motopropulseur selon la revendication 10 ou 11 ou 12, **caractérisé en ce que** la fermeture du premier coupleur permet au moteur thermique (3) de faire tourner la machine électrique secondaire (2) en générateur, pour recharger les batteries du véhicule, en roulage et à l'arrêt.

14. Procédé de commande d'un groupe motopropulseur selon l'une des revendications 10 à 13, **caractérisé en ce que** la fermeture simultanée des deux coupleurs (C1, C2) permet le déplacement du véhicule avec le cumul de la machine électrique principale (1) et du moteur thermique (3) sur quatre modes de transmission hybrides définis par les rapports de transmission thermique et hybrides(R1, r1), (R1, r2), (R2, r1), (R2, r2).

## Patentansprüche

1. Hybridantrieb eines Fahrzeugs, der aus einem Getriebe nach einem der Ansprüche 7 bis 9 und drei Antriebsquellen (1, 2, 3) besteht, wobei die drei Antriebsquellen (1, 2, 3) jeweils mit den axial versetzten Antriebswellen (5, 6, 11) des Getriebes (4) verbunden sind.

2. Antrieb nach Anspruch 1, **dadurch gekennzeichnet, dass** die drei Antriebsquellen jeweils eine elektrische Hauptmaschine (1), eine elektrische Sekundärmaschine (2) und ein Verbrennungsmotor (3) sind.

3. Antrieb nach dem vorhergehenden Anspruch, **dadurch gekennzeichnet, dass** das Drehmoment des Verbrennungsmotors (3) mittels des Doppelrades (13, 14), das sich frei auf der Antriebswelle (5) der elektrischen Hauptmaschine (1) dreht, zu der gemeinsamen Abtriebswelle (7) geleitet wird.

4. Antrieb nach einem der Ansprüche 2 bis 3, **dadurch gekennzeichnet, dass** das erste Koppelelement (24) die Übertragung des Drehmoments von dem Verbrennungsmotor (3) auf die gemeinsame Abtriebswelle (7) mit zwei Übersetzungsverhältnissen (R1, R2) herstellt.

5. Antrieb nach Anspruch 2 oder 3 oder 4, **dadurch gekennzeichnet, dass** das zweite Koppelelement (26) die Übertragung des Drehmoments von der elektrischen Sekundärmaschine (2) zu der gemeinsamen Abtriebswelle (7) mit zwei Übersetzungsverhältnissen (r1, r2) herstellt.

6. Antrieb nach einem der Ansprüche 2 bis 5, **dadurch gekennzeichnet, dass** das Drehmoment der elektrischen Hauptmaschine (1) durch ein Festrad (12) ihrer Antriebswelle 5, das mit einem Festrad (21) der gemeinsamen Abtriebswelle (7) in Eingriff ist, dauerhaft auf die gemeinsame Abtriebswelle (7) übertragen wird.

7. Getriebe (4) mit parallelen Wellen und Zahnrädern, das Folgendes umfasst: drei axial versetzte Antriebswellen (5, 6, 11), die dazu bestimmt sind, jeweils mit drei Antriebsquellen (1, 2, 3) verbunden zu sein, und mit einer gemeinsamen Abtriebswelle hin zu den Rädern des Fahrzeugs verbunden sind, und zwei Koppelelemente (24, 26), die es gestatten, den Transfer des Drehmoments, das durch die Antriebswelle jeder Antriebsquelle bereitgestellt wird, zu der gemeinsamen Abtriebswelle (7) selektiv herzustellen, umfassend
- ein erstes Koppelelement (24), das es gestattet, die Übertragung des Drehmoments von einer ersten Antriebswelle (11) auf die gemeinsame Abtriebswelle (7) mit zwei Übersetzungsverhältnissen (R1, R2) herzustellen, und
- ein zweites Koppelelement (26), das es gestattet, die Übertragung des Drehmoments von einer zweiten Antriebswelle (6) zu der gemeinsamen Abtriebswelle (7) mit zwei Übersetzungsverhältnissen (r1, r2) herzustellen,
**dadurch gekennzeichnet, dass** es ein Doppelrad (13, 14) umfasst, das sich frei um die dritte Antriebswelle (5) dreht, um das Drehmoment der zwei ersten Antriebswellen (11, 6) zu der gemeinsamen Abtriebswelle (7) zu leiten.

8. Getriebe nach Anspruch 7, **dadurch gekennzeichnet, dass** das Drehmoment der ersten Antriebswelle (11) je nach Position des ersten Koppelelements (24) über das eine oder das andere von zwei Losrädern (17, 18) auf das Doppelrad (13, 14) übergeht.

9. Getriebe nach Anspruch 7 oder 8, **dadurch gekennzeichnet, dass** das Drehmoment der zweiten Antriebswelle je nach Position des zweiten Koppelelements (26) durch eine Verzahnung (16, 23) oder mittels des Doppelrades (13, 14) auf die gemeinsame Abtriebswelle 7 übertragen wird.

10. Verfahren zur Steuerung eines Antriebs nach einem der Ansprüche 2 bis 6, **dadurch gekennzeichnet, dass** das Öffnen der zwei Koppelelemente (24, 26) es gestattet, das Fahrzeug nur mit der elektrischen Hauptmaschine (1) zu bewegen.

11. Verfahren zur Steuerung eines Antriebs nach dem vorhergehenden Anspruch, **dadurch gekennzeichnet, dass** das Schließen des zweiten Koppelelements (26) die Bewegung des Fahrzeugs im Elektromodus mit der elektrischen Hauptmaschine (1) und der elektrischen Sekundärmaschine (2) als Ergänzung mit dem elektrischen Verhältnis (r1) oder (r2) ermöglicht.

12. Verfahren zur Steuerung eines Antriebs nach Anspruch 10 oder 11, **dadurch gekennzeichnet, dass** das gleichzeitige Schließen der zwei Koppelelemente (24, 26) die Bewegung des Fahrzeugs mit der Vereinigung der zwei elektrischen Maschinen (1, 2) in vier Hybridübersetzungsmodi gestattet, die durch die Verbrenner- und Hybridübersetzungsverhältnisse (R1, r1), (R1, r2), (R2, r1), (R2, r2) definiert werden.

13. Verfahren zur Steuerung eines Antriebs nach Anspruch 10 oder 11 oder 12, **dadurch gekennzeichnet, dass** das Schließen des ersten Koppelelements dem Verbrennungsmotor (3) gestattet, die elektrische Sekundärmaschine (2) als Generator drehen zu lassen, um die Batterien des Fahrzeugs während der Fahrt und im Stillstand wiederaufzuladen.

14. Verfahren zur Steuerung eines Antriebs nach einem der Ansprüche 10 bis 13, **dadurch gekennzeichnet, dass** das gleichzeitige Schließen der zwei Koppelelemente (C1, C2) die Bewegung des Fahrzeugs mit der Vereinigung der elektrischen Hauptmaschine (1) und des Verbrennungsmotors (3) in vier Hybridübersetzungsmodi gestattet, die durch die Verbrenner- und Hybridübersetzungsverhältnisse (R1, r1), (R1, r2), (R2, r1), (R2, r2) definiert werden.

## Claims

1. Hybrid powertrain for a vehicle, composed of a gearbox according to one of Claims 7 to 9 and of three driving sources (1, 2, 3), the three driving sources (1, 2, 3) being respectively connected to the axially offset input shafts (5, 6, 11) of the gearbox (4).

2. Powertrain according to Claim 1, **characterized in that** the three driving sources are respectively a main electric machine (1), a secondary electric machine (2) and a combustion engine (3).

3. Powertrain according to the preceding claim, **characterized in that** the torque from the combustion engine (3) is sent to the common output shaft (7) via the double gear (13, 14) rotating freely on the input shaft (5) of the main electric machine (1).

4. Powertrain according to either of Claims 2 and 3, **characterized in that** the first coupler (24) establishes the transmission of the torque from the combustion engine (3) to the common output shaft (7) in two transmission ratios (R1, R2).

5. Powertrain according to Claim 2 or 3 or 4, **characterized in that** the second coupler (26) establishes the transmission of the torque from the secondary electric machine (2) to the common output shaft (7) in two transmission ratios (r1, r2).

6. Powertrain according to one of Claims 2 to 5, **characterized in that** the torque from the main electric machine (1) is permanently transmitted to the common output shaft (7) by a fixed gear (12) of its input shaft (5) that is in engagement with a fixed gear (21) of the common output shaft (7).

7. Gearbox (4) with parallel shafts and with gears, comprising three axially offset input shafts (5, 6, 11) intended to be respectively connected to three driving sources (1, 2, 3) and connected to a common output shaft to the wheels of the vehicle, and two couplers (24, 26) making it possible to selectively establish the transfer of the torque provided by the input shaft of each driving source to the common output shaft (7), comprising
- a first coupler (24) making it possible to establish the transmission of the torque from a first input shaft (11) to the common output shaft (7) in two transmission ratios (R1, R2), and
- a second coupler (26) making it possible to establish the transmission of the torque from a second input shaft (6) to the common output shaft (7) in two transmission ratios (r1, r2),
**characterized in that** it comprises a double gear (13, 14) rotating freely around the third input shaft (5) in order to send the torque from the two first input shafts (11, 6) to the common output shaft (7).

8. Gearbox according to Claim 7, **characterized in that** the torque from the first input shaft (11) passes down to the double gear (13, 14) via one or other of two idler gears (17, 18) according to the position of the first coupler (24).

9. Gearbox according to Claim 7 or 8, **characterized in that** the torque from the second input shaft is transmitted to the common output shaft (7) by a gear (16, 23) or via the double gear (13, 14) according to the position of the second coupler (26).

10. Method for controlling a powertrain according to one of Claims 2 to 6, **characterized in that** opening the two couplers (24, 26) makes it possible to move the vehicle with the main electric machine (1) only.

11. Method for controlling a powertrain according to the preceding claim, **characterized in that** closing the second coupler (26) ensures the movement of the vehicle in electric mode with the main electric machine (1) and assistance from the secondary electric machine (2) in the electric ratio (r1) or (r2).

12. Method for controlling a powertrain according to Claim 10 or 11, **characterized in that** simultaneously closing the two couplers (24, 26) allows the movement of the vehicle with the two electric machines (1, 2) together in four hybrid transmission modes defined by the combustion and hybrid transmission ratios (R1, r1), (R1, r2), (R2, r1), (R2, r2).

13. Method for controlling a powertrain according to Claim 10 or 11 or 12, **characterized in that** closing the first coupler allows the combustion engine (3) to rotate the secondary electric machine (2) as a generator in order to charge the batteries of the vehicle when it is moving and stationary.

14. Method for controlling a powertrain according to one of Claims 10 to 13, **characterized in that** simultaneously closing the two couplers (C1, C2) allows the movement of the vehicle with the main electric machine (1) and the combustion engine (3) together in four hybrid transmission modes defined by the combustion and hybrid transmission ratios (R1, r1), (R1, r2), (R2, r1), (R2, r2) .
